## Europäisches Patentamt
## European Patent Office
## Office européen des brevets

(19)

(11) Veröffentlichungsnummer: **0 163 066**
**B1**

(12) **EUROPÄISCHE PATENTSCHRIFT**

(45) Veröffentlichungstag der Patentschrift:
**13.07.88**

(51) Int. Cl.⁴: **B 23 K 37/04**

(21) Anmeldenummer: **85104066.7**

(22) Anmeldetag: **03.04.85**

(54) Schweissdrehtisch.

(30) Priorität: **26.05.84 DE 3419753**

(43) Veröffentlichungstag der Anmeldung:
**04.12.85 Patentblatt 85/49**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
DE - A - 1 527 033
DE - A - 2 038 232
DE - A - 2 451 997
DE - A - 2 551 200
GB - A - 1 290 740
US - A - 3 357 622

MACHINES & TOOLING, Band 51, Nr. 10, 1980, Seite 33, Melton Mowbray, GB; B.P. VOLYNETS "Pneumatic attachment for clamping flange-type parts in NC drilling machines"
WERKSTATTSTECHNIK, Band 69, Nr. 4, April 1979, Seiten 201-206, Berlin; W. DEPPERT:"Druckluftzylinder, Bausteine der Mechanisierung"

(73) Patentinhaber: **Paul Hütter KG Maschinen- und Eisenbau, Rebgarten 21, D-7858 Weil am Rhein 5 (DE)**

(72) Erfinder: **Hütter, Hansjörg, Erlenweg 23, D-7858 Weil 6 (DE)**

(74) Vertreter: **Schmitt, Hans, Dipl.-Ing. et al, Dreikönigstrasse 13, D-7800 Freiburg (DE)**

## Beschreibung

Die Erfindung betrifft einen Schweissdrehtisch mit einem motorisch angetriebenen Drehteller zum Unterstützen und Positionieren eines zu bearbeitenden Werkstückes sowie gegebenenfalls mit einer Schwenklagerung zum seitlichen Verschwenken des Drehtellers und mit einer Spannvorrichtung zum Festhalten des Werkstückes, welche eine über die Ebene der Auflageseite des Drehtellers überstehende Haltesäule aufweist.

Solche Schweissdrehtische dienen als Hilfsvorrichtung beim Schweissen. Dadurch kann ein Werkstück entsprechend gedreht werden und die Schweissapparatur kann an einer Stelle verbleiben, so dass das Schweissgerät wesentlich ruhiger gehalten werden kann und die Schweissnaht dadurch auch gleichmässiger bzw. qualitativ besser wird. Der Schweissvorgang selbst kann wahlweise manuell oder durch einen Automaten ausgeführt werden.

Ein Schweissdrehtisch der vorgenannten Art ist bereits aus der US-A-3 357 622 bekannt, wobei die Werkstücke auf dem Drehteller mittels aufwendiger und komplizierter Hilfseinrichtungen befestigt werden. Dies erfordert einen erheblichen Zeitaufwand und ist auch umständlich. Besonders bei einer Serienproduktion ist dann der erforderliche Umspannaufwand für das Werkstück vergleichsweise gross.

Aus der GB-A-1 290 740 ist weiterhin ein Schweissdrehtisch bekannt, der an zwei äusseren Haltesäulen oberhalb eines einzuspannenden Werkstückes eine höheneinstellbare Andrückvorrichtung aufweist. Diese Haltesäulen und auch die Andrückvorrichtung behindern das Bestücken oder Entnehmen der Vorrichtung mit einem Werkstück, was insbesondere bei schnellem Werkstückwechsel (Serienfertigung) nachteilig ist. Ausserdem wird dadurch eine erhebliche Schwerpunktverlagerung nach oben verursacht, was hinsichtlich der erforderlichen Antriebs- und Haltekräfte Nachteile hat.

Aufgabe der vorliegenden Erfindung ist es, einen Schweissdrehtisch zu schaffen, der einerseits einfach und zeitsparend einsetzbar ist, wobei notwendige Umspannvorgänge insbesondere auch schnell und einfach durchführbar sind.

Zur Lösung dieser Aufgabe wird vorgeschlagen, dass die Haltesäule an ihrem freien Ende Anschlussmittel für das Werkstück beaufschlagende Halter hat und als verfahrbare Hubstange ausgebildet ist und dass ihr Hubantrieb unterhalb des Drehtellers angeordnet ist. Mittels einer solchen Spannvorrichtung kann ein Werkstück wesentlich schneller aufgespannt werden, so dass sich insbesondere auch bei Serienbearbeitungen insgesamt wesentlich kürzere Durchlaufzeiten ergeben.

Es ist zwar aus Machines & Tooling, Band 51, Nr. 10, 1980, Seite 33, Melton Mowbray, GB; B.P. VOLYNETS «Pneumatic attachment for clamping flange-type parts in NC drilling machines» eine Bohrmaschine mit einer Spannvorrichtung und einer verfahrbaren Zugstange bekannt; diese Vorrichtung weist jedoch keinen Drehtisch auf und eignet sich nicht zum Anfertigen von kreisförmig verlaufenden Schweissnähten.

Zweckmässigerweise ist die Hubstange mit wenigstens einem Spannzylinder als Hubantrieb verbunden, wobei die Hubstange vorzugsweise in ihrer Länge veränderbar ist und dazu insbesondere aus mehreren, miteinander verbindbaren Abschnitten besteht. Durch den Spannzylinder kann das Werkstück schnell aufgespannt werden und durch die in ihrer Länge veränderbare Hubstange ist eine Anpassung an unterschiedliche Werkstücke bei gleichbleibendem Hubweg möglich.

Eine bevorzugte Ausführungsform sieht vor, dass der Schweissdrehtisch eine im Zentralbereich seines Drehtellers, gegebenenfalls etwa zentral dazu angeordnete Hubstange aufweist. Dadurch sind insbesondere mit einer Innenhöhlung versehene Werkstücke besonders schnell und einfach festspannbar. Zweckmässigerweise ist am freien Ende der Hubstange bzw. von deren Endabschnitt wenigstens eine Queröffnung zur Aufnahme eines riegelartigen Halters vorgesehen, wobei vorzugsweise zumindest der Hubantrieb für die Hubstange mit einer Sperrvorrichtung verbunden ist derart, dass der Hubantrieb in Spannlage ausserhalb einer etwa horizontalen Lage des Drehtellers gesperrt ist. Zum Aufspannen eines Werkstückes kann somit die Hubstange dieses durchgreifen und der riegelartige Halter kann dann am oberen Ende das Werkstück beaufschlagen. Durch die Sicherheitssperre wird ein Freigeben des Werkstückes in Schräglage vermieden. Nach einer Weiterbildung der Erfindung kann der Schweissdrehtisch wenigstens einen zusätzlichen Seitenhalter mit jeweils einem Spannzylinder zum Festspannen des Werkstückes bzw. eines Werkstückteiles aufweisen, die vorzugsweise das Werkstück etwa zum Drehteller hin beaufschlagend ausgebildet sind und wobei die Spannzylinder zweckmässigerweise eine etwa zum Drehteller parallele Hubbewegung haben und vorzugsweise zu dem bzw. den Seitenhaltern diametral angeordnete Seitenanschläge für das Werkstück vorgesehen sind. Durch diese mit Spannzylindern versehenen Seitenhalter ist ebenfalls ein schnelles Einspannen eines Werkstückes möglich. Darüber hinaus können diese Seitenhalter in Kombination mit einer zentralen, eine Hubstange aufweisenden Spannvorrichtung auch zum Festlegen von komplizierten, mehrteiligen Werkstücken eingesetzt werden.

Als Schwenkantrieb für den Drehteller sind nach einer Ausgestaltung der Erfindung wenigstens ein, vorzugsweise zwei Hubzylinder vorgesehen, die einerseits am Maschinengestell und andererseits an einem Drehlager-Kasten od. dgl. des Drehtellers angreifen, wobei der Schwenkwinkel einstellbar ist und maximal vorzugsweise mehr als 90°, z.B. 105° beträgt. Durch die Verwendung von Hubzylindern lässt sich der Drehtisch über einen weiten Bereich schnell positionieren, so dass gut eine Anpassung an unterschiedliche Werkstücke bzw. Schweissstellen möglich ist.

Zweckmässigerweise befinden sich der Antrieb für die zentrale Spannvorrichtung sowie vorzugsweise auch der Drehantrieb für den Drehteller unterhalb von diesem, wobei die Schwenklagerung insbesondere nahe bei dem Drehteller angeordnet ist. Dadurch ist einerseits eine kompakte Einheit gebildet und andererseits bilden der Spannvorrichtungs-Antrieb sowie der Drehantrieb Gegengewichte für ein auf dem Drehteller festgespanntes Werkstück, so dass dementsprechend auch bei schwereren Werkstücken eine leichte Positionierbarkeit, insbesondere in Schwenkrichtung gegeben ist.

Vorteilhafterweise schliesst bei einer mehrteiligen Hubstange der antriebsseitige Hubstangen-Abschnitt in unterer Endlage mit seinem freien Ende etwa mit der Auflageebene des Drehtellers ab und weist an diesem Ende eine Kupplung, vorzugsweise eine Gewindebohrung zum Anschluss einer Verlängerung auf. Erforderlichenfalls kann somit die Hubstange aus dem Bereich des Drehtellers zurückgezogen werden, so dass sie bei einer anderen vorgesehenen Befestigung nicht störend über den Drehtellerbereich vorsteht.

Vorteilhafterweise ist der Dreh-Antriebsmotor mit einem Getriebe verbunden, das insbesondere als stufenlos verstellbares Getriebe, vorzugsweise als Kugelscheibengetriebe ausgebildet ist, wobei der Antriebsmotor mit etwa konstanter Drehzahl laufend ausgebildet ist und für Rechts- und Linkslauf umschaltbar ist, wobei die Antriebs-Hohlwelle ein Schneckenrad trägt, das mit einer dem Antriebsmotor bzw. dem Zwischengetriebe zugeordneten Schnecke kämmt. Durch diese Kombination lassen sich auch sehr niedrige Drehzahlen einstellen bei gleichzeitig ruckfreiem Lauf.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt:

Fig. 1 eine Seitenansicht eines Schweissdrehtisches;

Fig. 2 ebenfalls eine Seitenansicht eines Schweissdrehtisches, hier jedoch gegenüber Fig. 1 um 90° verdreht, dargestellt,

Fig. 3 eine Aufsicht eines Schweissdrehtisches und

Fig. 4 eine Längsschnittdarstellung des Drehtellers mit Drehantrieb sowie Spannvorrichtung.

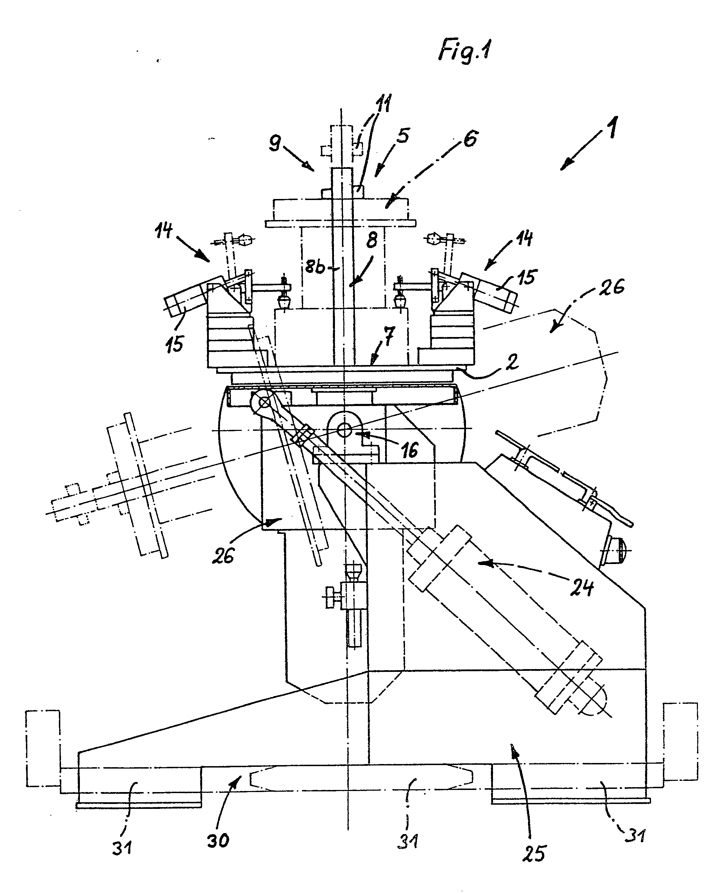

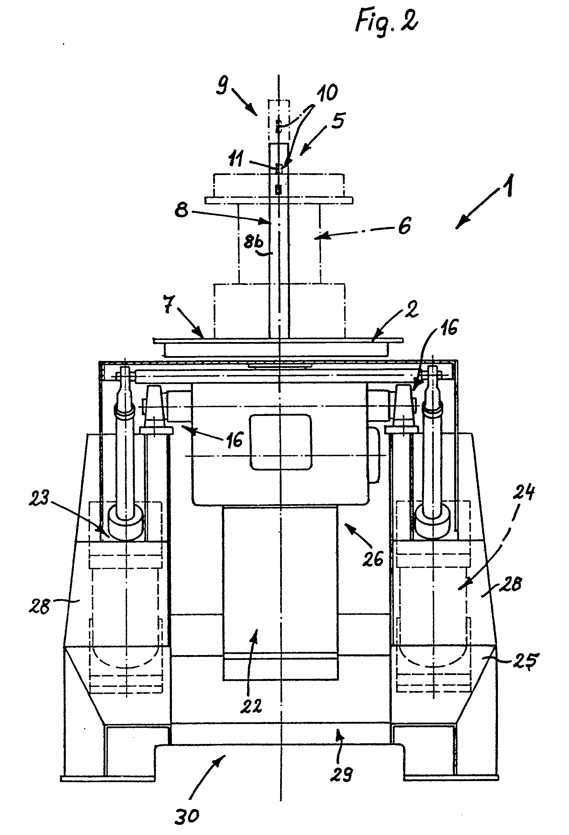

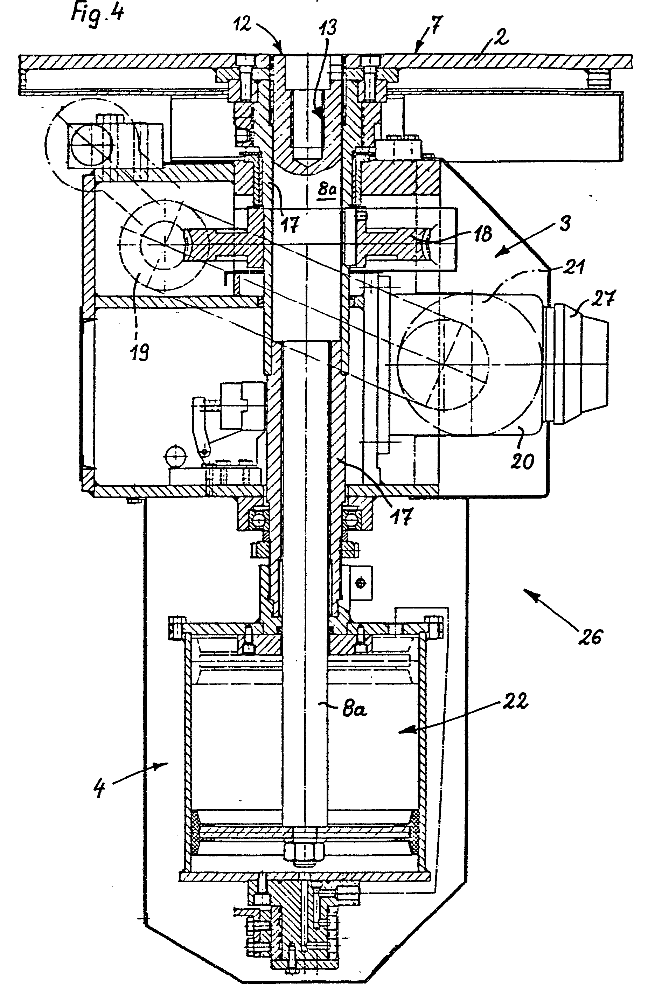

Ein Schweissdrehtisch 1 weist im wesentlichen einen motorisch angetriebenen Drehteller 2 mit darunter befindlichem Drehantrieb 3 sowie einem Hubantrieb 4 für eine zentrale Spannvorrichtung 5 auf (vgl. auch Fig. 4). Auf dem Drehteller 2 kann ein in den Fig. 1 und 2 strichpunktiert dargestelltes Werkstück 6 zur Durchführung von Schweissarbeiten aufgespannt werden. Insbesondere bei am Umfang von Werkstücken anzubringenden Schweissnähten ergibt ein Schweissdrehtisch eine wesentliche Arbeitserleichterung, da die in der Regel sperrige Schweissapparatur an einer Stelle verbleiben kann. Zusätzlich zur Drehbewegung des Drehtellers 2 kann dieser auch seitlich verschwenkt werden. In Fig. 1 ist strichpunktiert die Extremschwenklage dargestellt, wobei der Drehteller 2 aus seiner horizontalen Lage um einen Winkel von etwa 105° verschwenkt ist. Somit kann das Werkstück je nach dem vorhandenen Schweissbereich in eine für die Bearbeitung günstige Position gebracht werden.

Insbesondere bei eine Innenhöhlung aufweisenden Werkstücken 6 ist die vorgesehene, zentrale Spannvorrichtung 5 vorteilhaft. Einerseits kann dadurch nämlch mit einem einzigen Spannelement ein Werkstück 6 bzw. Werkstückteile auf dem Drehteller 2 festgespannt werden. Andererseits ist hierbei insbesondere auch vorteilhaft, dass der gesamte Umfangsbereich des Werkstückes für eine Schweissbearbeitung zugänglich ist. Insbesondere bei kontinuierlich umlaufenden Schweissnähten ist dies vorteilhaft, da durch die zentrale Einspannung eine unterbrechungslose Umfangsschweissung möglich ist. Dadurch lässt sich einerseits eine schnellere Bearbeitung erzielen und andererseits kann dadurch auch insgesamt die Qualität der Schweissnaht verbessert werden.

Die zentrale Spannvorrichtung 5 weist im Ausführungsbeispiel eine über die Auflageseite 7 des Drehtellers 2 verfahrbare Hubstange 8 auf, die an ihrem freien Ende 9 wenigstens eine Queröffnung 10 zur Aufnahme eines riegelartigen Halters 11 hat. Gegebenenfalls können im Verlauf der Hubstange 8 auch mehrere solcher Queröffnungen 10 in Anpassung an unterschiedliche Werkstücke vorgesehen sein. Man kommt dadurch mit einem vergleichsweise kurzen Arbeitshub aus, da die Grob-Längenanpassung zunächst durch das Einstecken des Halteers 11 in die dem Werkstück 6 am nächsten liegende Queröffnung 10 erfolgen kann. Eine andere vorteilhafte Ausgestaltung sieht vor, dass zur Längenanpassung der Hubstange 8 an unterschiedliche Werkstücke 6, die Hubstange aus mehreren, miteinander verbindbaren Abschnitten besteht. Insbesondere ist hier eine zweiteilige Ausbildung der Hubstange 8 vorteilhaft, wobei der antriebsseitige Hubstangenabschnitt 8a in unterer Endlage mit seinem freien Ende 12 etwa mit der Auflageebene 7 des Drehtellers 2 abschliesst, wie dies in Fig. 4 dargestellt ist. Am freien Ende 12 ist dann eine Gewindebohrung 13 zum Anschluss einer Hubstangen-Verlängerung 8b vorgesehen. Deren Länge kann je nach festzuspannendem Werkstück 6 bemessen sein. Die mehrteilige Ausbildung mit etwa zur. Auflageseite zurückziehbarem Hubstangenabschnitt 8a hat den Vorteil, dass in üblicher Weise auch Werkstücke aufgespannt werden können, die keine zentrale Durchtrittsöffnung haben und durch Seitenhalter 14 (Fig. 1) festgespannt werden. Solche Seitenhalter 14 sind zweckmässigerweise jeweils mit einem Spannzylinder 15 versehen, so dass der eigentliche Spannvorgang sehr schnell und einfach vorgenommen werden kann. Seitenhalter 14 können beispielsweise bei längeren Werkstücken 6 bzw. komplizierten, mehrteiligen Werkstücken gegebenenfalls zusätzlich erforderlich sein. Diese Seitenhalter 14 sind so ausgebildet, dass sie das Werkstück zum Drehteller 2 hin beaufschlagen. Es können aber auch Seitenhalter mit Spannzylindern vorgesehen sein, die eine etwa zum Drehteller parallele Hubbewegung aufweisen. In diesem Falle sind zu dem bzw. den Seitenhaltern etwa diametral angeordnete Seitenanschläge für das Werkstück vorgesehen.

Wie bereits vorerwähnt, befindet sich der Hubantrieb 4 sowie auch der Drehantrieb 3 für den Drehteller 2 unterhalb von diesem und die Schwenklagerung 16 ist insbesondere nahe bei dem Drehteller 2 angeordnet. Die Dreh- und Schwenkantriebe bilden somit ein Gegengewicht für ein auf dem Drehteller befindliches Werkstück, so dass auch bei schweren Werkstücken zumindest teilweise ein Massenausgleich vorhanden ist, so dass die auftretenden Drehmomente in Grenzen gehalten werden.

Fig. 4 lässt gut erkennen, dass die Antriebswelle 17 für den Drehteller 2 als Hohlwelle ausgebildet ist und eine Längsführung für die Hubstange 8 bzw. von deren antriebsseitigem Abschnitt 8a bildet. Die Hohlwelle 17 trägt ein Schneckenrad 18, das mit einer Schnecke 19 kämmt. Diese steht mit einem Getriebe 20 in Antriebsverbindung. Das Getriebe 20 ist insbesondere als Kugelscheibengetriebe (PIV-Getriebe) ausgebildet und lässt sich hinsichtlich seiner Abtriebsdrehzahl an einem Handrad 27 stufenlos verstellen. Dadurch kann der mit dem Getriebe 20 verbundene Antriebsmotor 21 mit etwa konstanter Drehzahl bei etwa gleichbleibendem Drehmoment laufen. Durch diese Kombination von Motor und Getriebe kann der Drehteller 2 mit sehr geringer Drehzahl angetrieben werden, wobei trotzdem ein «stotterfreier» Betrieb möglich ist. Auch dies trägt zur qualitativen Verbesserung der zu erstellenden Schweissnaht bei. Der Motor ist von Rechts- auf Linkslauf umschaltbar.

Unterhalb des Drehantriebes 3 befindet sich der Hubantrieb 4 für die Spannvorrichtung mit einem Spannzylinder 22. Der Hubantrieb 4, der Drehantrieb 3 sowie der Drehteller 2 bilden somit eine zusammenhängende, insgesamt seitenverschwenkbare Einheit.

Als Schwenkantrieb sind zwei Hubzylinder 23, 24 vorgesehen, die in Fig. 1 und 2 gut erkennbar sind. Diese greifen einerseits am Maschinengestell 25 und andererseits an einem den Drehantrieb 3 und den Hubantrieb 4 umschliessenden Drehlager-Kasten 26 an. Der Schwenkwinkel ist einstellbar und beträgt im Ausführungsbeispiel etwa 105°. Diese maximale Schwenklage ist in Fig. 1 strichpunktiert angedeutet. Zur Begrenzung der Schwenkbewegung sind verstellbare Anschläge vorgesehen.

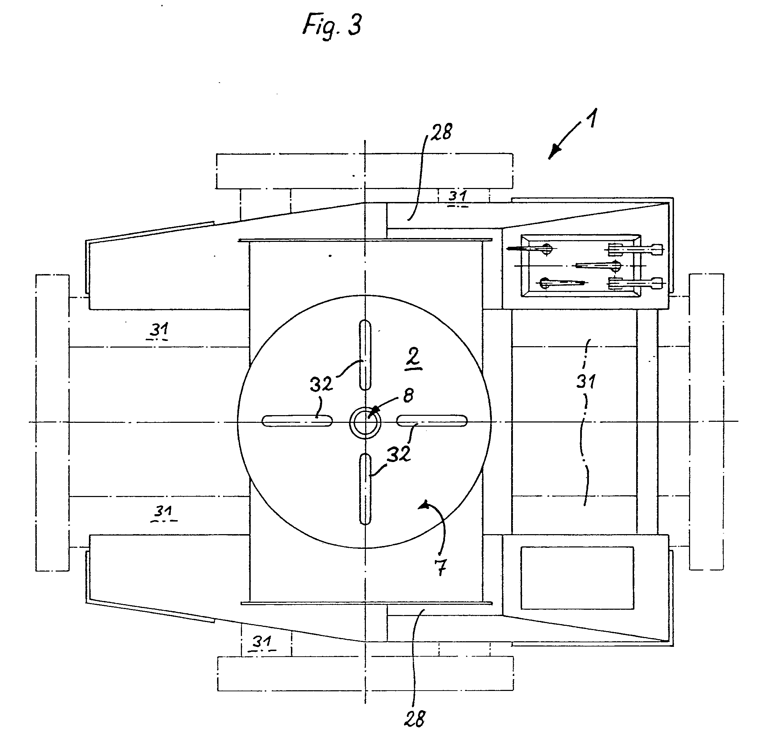

Aus Sicherheitsgründen ist eine Sperrvorrichtung vorgesehen, welche die Spannvorrichtung 5 und gegebenenfalls auch die Seitenhalter 14 sperrt, solange sich der Drehteller 2 nicht in einer etwa horizontalen Lage befindet. Dadurch wird verhindert, dass gehaltene Werkstücke in Schräglage des Drehtellers 2 freigegeben werden. Die Spannzylinder 22, 15 sowie auch die Hubzylinder 23, 24 können als Pneumatik- oder Hydraulik-Zylinder ausgebildet sein. Dadurch ist insbesondere auch ein sehr schnelles Verstellen bzw. Positionieren und Festspannen möglich. Zur Bildung eines entsprechenden Schwenk-Freiraumes für den Drehlager-Kasten 26 mit dem Drehantrieb 3 und dem Hubantrieb 4 ist das Maschinengestell 25, ausgehend von den beiden Schwenklagern 16, zweischenklig mit zwei Stützsäulen 28 ausgebildet. Diese sind unterhalb des Drehlager-Kastens 26 durch eine Quertraverse 29 verbunden. Diese ist einerseits so angeordnet, dass die Verschwenkbarkeit des Drehlager-Kastens möglich ist und dass andererseits auch die erforderliche Stabilität des Maschinengestells 25 erreicht wird. Schliesslich ist die Quertraverse 29 mit bodenseitigem Abstand angeordnet. Dadurch besteht die Möglichkeit, dass sie z.B. durch die Gabel 31 eines Gabelhubwagens od.dgl. untergriffen werden kann, so dass der Schweissdrehtisch 1 dann auf einfache Weise an unterschiedlichen Arbeitsplätzen eingesetzt werden kann. Vorzugsweise weisen auch die beiden Stützsäulen 28 am unteren Ende seitliche Eingriffsöffnungen 30 zum Ansetzen eines Gabelhubwagens od.dgl. auf. Somit kann der Schweissdrehtisch beliebig von seinen vier Seiten her untergriffen werden. Strichpunktiert ist in Fig. 3 dargestellt, wie die Gabeln 31 jeweils an den Seiten des Schweissdrehtisches 1 angesetzt werden können.

Neben der dargestellten, bevorzugten Ausführungsform eines Schweissdrehtisches mit zentraler Spannvorrichtung 5 könnte auch ein das Werkstück seitlich übergreifender Halter vorgesehen sein, der mit einem oder mehreren Spannzylindern verbunden ist. Insbesondere bei Werkstücken, bei denen keine umlaufende Schweissnaht erforderlich ist, andererseits aber ein schnelles Umspannen erwünscht ist, kann diese Ausführungsform vorteilhaft sein. Vor allem aber lassen sich damit auch Werkstücke schnell aufspannen, die keine Innenhöhlung aufweisen. Fig. 3 lässt noch radiale Nuten oder Schlitze 32 erkennen, die zum Befestigen insbesondere der Seitenhalter 14 dienen.

**Patentansprüche**

1. Schweissdrehtisch (1) mit einem motorisch angetriebenen Drehteller (2) zum Unterstützen und Positionieren eines zu bearbeitenden Werkstückes (6) sowie gegebenenfalls mit einer Schwenklagerung (16) zum seitlichen Verschwenken des Drehtellers (2) und mit einer Spannvorrichtung (5) zum Festhalen des Werkstückes, welche eine über die Ebene der Auflageseite (7) des Drehtellers (2) überstehende Haltesäule aufweist, dadurch gekennzeichnet, dass die Haltesäule an ihrem freien Ende (9) Anschlussmittel (10) für das Werkstück (6) beaufschlagende Halter (11) hat und als verfahrbare Hubstange (8) ausgebildet ist und dass ihr Hubantrieb unterhalb des Drehtellers (2) angeordnet ist.

2. Schweissdrehtisch nach Anspruch 1, dadurch gekennzeichnet, dass die Hubstange (8) mit wenigstens einem Spannzylinder (22) als Hubantrieb verbunden ist, und dass die Hubstange (8) vorzugsweise in ihrer Länge veränderbar ist und dazu insbesondere aus mehreren, miteinander verbindbaren Abschnitten (8a, 8b) besteht.

3. Schweissdrehtisch nach Anspruch 1 oder 2, dadurch gekennzeichnet, dass er eine im Zentralbereich seines Drehtellers (2), gegebenenfalls etwa zentral dazu angeordnete Hubstange (8) aufweist.

4. Schweissdrehtisch nach einem der Ansprüche 1 bis 3, dadurch gekennzeichnet, dass am freien Ende der Hubstange (8) bzw. von deren Verlängerung (8b) wenigstens eine Queröffnung (10) zur Aufnahme eines riegelartigen Halters (11) od.dgl. vorgesehen ist und dass vorzugsweise zumindest der Hubantrieb für die Hubstange (8) mit einer Sperrvorrichtung verbunden ist derart, dass der Hubantrieb in Spannlage ausserhalb einer etwa horizontalen Lage des Drehtellers (2) gesperrt ist.

5. Schweissdrehtisch nach einem der Ansprüche 1 bis 4, dadurch gekennzeichnet, dass er wenigstens einen zusätzlichen Seitenhalter (14) mit jeweils einem Spannzylinder (15) zum Festspannen eines Werkstückes bzw. eines Werkstückteiles aufweist, die vorzugsweise das Werkstück etwa zum Drehteller hin beaufschlagend ausgebildet sind, dass die Spannzylinder (15) zweckmässigerweise eine etwa zum Drehteller parallele Hubbewegung haben und dass vorzugsweise zu dem bzw. den Seitenhaltern diametral angeordnete Seitenanschläge für das Werkstück vorgesehen sind.

6. Schweissdrehtisch nach einem der Ansprüche 1 bis 5, dadurch gekennzeichnet, dass als Schwenkantrieb für den Drehteller (2) u.dgl. wenigstens ein, vorzugsweise zwei Hubzylinder (23, 24) vorgesehen sind, die einerseits am Maschinengestell (25) und andererseits an einem Drehlager Kasten (26) od.dgl. des Drehtellers (2) angreifen, und dass der Schwenkwinkel einstellbar ist und maximal vorzugsweise mehr als 90° z.B. 105° beträgt.

7. Schweissdrehtisch nach Anspruch 6, dadurch gekennzeichnet, dass zur Begrenzung der Schwenkbewegung wenigstens ein verstellbarer Anschlag vorgesehen ist und dass vorzugsweise die Hubzylinder (23, 24) für die Schwenkbewegung sowie vorzugsweise auch die Spannzylinder (15, 22) für die Spannvorrichtungen, als Pneumatik- oder Hydraulik-Zylinder ausgebildet sind.

8. Schweissdrehtisch nach einem der Ansprüche 1 bis 7, dadurch gekennzeichnet, dass sich der Antrieb (4) für die zentrale Spannvorrichtung (5) sowie vorzugsweise auch der Drehantrieb (3) für den Drehteller (2) unterhalb von diesem befinden und dass die Schwenklagerung (16) insbesondere nahe bei dem Drehteller (2) angeordnet ist.

9. Schweissdrehtisch nach einem der Ansprüche 1 bis 8, dadurch gekennzeichnet, dass die Antriebswelle (17) für den Drehteller (2) als Hohlwelle ausgebildet ist und eine Längsführung für die Hubstange (8) der Spannvorrichtung (5) bildet.

10. Schweissdrehtisch nach einem der Ansprüche 1 bis 9, dadurch gekennzeichnet, dass bei einer mehrteiligen Hubstange (8) der antriebsseitige Hubstangen-Abschnitt (8a) in unterer Endlage mit seinem freien Ende (12) etwa mit der Auflageebene (7) des Drehtellers (2) abschliesst und an diesem Ende eine Kupplung, vorzugsweise eine Gewindebohrung (13) zum Anschluss einer Verlängerung (8b) aufweist.

11. Schweissdrehtisch nach einem der Ansprüche 1 bis 10, dadurch gekennzeichnet, dass der Dreh-Antriebsmotor (21) mit einem Getriebe (20) verbunden ist, das insbesondere als stufenlos verstellbares Getriebe, vorzugsweise als Kugelscheibengetriebe ausgebildet ist, und dass der Antriebsmotor (21) mit etwa konstanter Drehzahl laufend ausgebildet und für Rechts- und Linkslauf umschaltbar ist, wobei vorzugsweise die Antriebs-Hohlwelle (17) ein Schneckenrad (18) trägt, das mit einer dem Antriebsmotor (21) bzw. dem Zwischengetriebe (20) zugeordneten Schnecke (19) kämmt.

12. Schweissdrehtisch nach einem der Ansprüche 1 bis 11, dadurch gekennzeichnet, dass der Drehantrieb (3) für den Drehteller (2) sowie der Antrieb der zentralen Spannvorrichtung (5) als zusammenhängende, insgesamt mit dem Drehteller (2) verschwenkbare Einheit ausgebildet ist, und dass sich vorzugsweise der Drehantrieb (3) zwischen dem Spannzylinder (22) für die Spannvorrichtung (5) sowie dem Drehteller (2) befindet.

13. Schweissdrehtisch nach einem der Ansprüche 1 bis 12, dadurch gekennzeichnet, dass das Maschinengestell (25), ausgehend von den beiden Schwenklagern (16), zweischenklig mit zwei Stützsäulen (28) ausgebildet ist, die unterhalb des Drehlager-Kastens (26) durch wenigstens eine Quertraverse (29) miteinander verbunden sind, die mit bodenseitigem Abstand angeordnet ist und dass vorzugsweise die Stützsäulen (28) am unteren Ende seitliche Eingriffsöffnungen (30) haben.

**Revendications**

1. Table rotative de soudage (1) comprenant un plateau tournant (2) à entraînement motorisé, pour soutenir et positionner une pièce (6) à usiner, ainsi qu'éventuellement un système de montage pivotant (16) pour faire pivoter latéralement le plateau tournant (2), et un dispositif d'ablocage (5) qui est destiné à retenir fermement la pièce à usiner, et présente une colonne de retenue faisant saillie au-dessus du plan de la face d'appui (7) du plateau tournant (2), caractérisée par le fait que la colonne de retenue possède, à son extrémité libre (9), des moyens de solidarisation (10) associés à des éléments de retenue (11) agissant sur la pièce (6) à usiner, et est réalisée sous la forme d'une tige mobile de levage (8), et par le fait que son entraînement en élévation est disposé au-dessous du plateau tournant (2).

2. Table rotative de soudage selon la revendication 1, caractérisée par le fait que la tige de levage (8) est reliée à au moins un vérin de blocage (22) faisant office d'entraînement en élévation, et par le fait que cette tige de levage (8) est, de préférence, de longueur variable et se compose notamment, à cette fin, de plusieurs tronçons (8a, 8b) pouvant être reliés les uns aux autres.

3. Table rotative de soudage selon la revendication 1 ou 2, caractérisée par le fa fait qu'elle présente une tige de levage (8) qui est disposée dans la région centrale de son plateau tournant (2) ou occupe, le cas échéant, une position sensiblement centrale par rapport à ce dernier.

4. Table rotative de soudage selon l'une des revendications 1 à 3, caractérisée par le fait qu'au moins un orifice transversal (10), destiné à recevoir un élément de retenue (11) du type verrou ou un élément similaire, est prévu à l'extrémité libre de la tige de levage (8) ou, respectivement, du prolongment (8b) de celle-ci; et par le fait que, de préférence, au moins l'entraînement en élévation de la tige de levage (8) est relié à un dispositif de verrouillage, de telle sorte que cet entraînement en élévation soit verrouillé, en position bloquée, en dehors d'une position sensiblement horizontale du plateau tournant (2).

5. Table rotative de soudage selon l'une des revendications 1 à 4, caractérisée par le fait qu'elle comporte au moins un élément supplémentaire de retenue latérale (14) muni, à chaque fois, d'un vérin de blocage (15) destiné à abloquer respectivement une pièce à usiner, ou une partie d'une pièce à usiner, lesdits vérins étant de préférence réalisés pour agir, sur la pièce à usiner, sensiblement en direction du plateau tournant; par le fait que les vérins de blocage (15) effectuent, commodément, un mouvement de levage approximativement parallèle au plateau tournant; et par le fait que des butées latérales, prévues pour la pièce à usiner, sont de préférence disposées diamétralement par rapport à l'élément ou aux éléments de retenue latérale.

6. Table rotative de soudage selon l'une des revendications 1 à 5, caractérisée par le fait qu'il est prévu, en tant qu'entraînement en pivotement du plateau tournant (2) et éléments similaires, au moins un, de préférence deux vérins de levage (23, 24) qui sont en prise, d'une part, avec le bâti (25) de la machine et, d'autre part, avec une boîte (26) de paliers de rotation ou une partie similaire du plateau tournant (2); et par le fait que l'angle de pivotement est réglable et mesure au maximum, de préférence, plus de 90°, par exemple 105°.

7. Table rotative de soudage selon la revendication 6, caractérisée par le fait qu'au moins une butée réglable est prévue pour limiter le mouvement pivotant; et par le fait que, de préférence les vérins de levage (23, 24) assurant le mouvement pivotant, ainsi que, de préférence, également les vérins de blocage (15, 22) associés aux dispositifs d'ablocage, sont réalisés sous la forme de vérins pneumatiques ou hydrauliques.

8. Table rotative de soudage selon l'une des revendicatons 1 à 7, caractérisé par le fait que l'entraînement (4) du dispositif central d'ablocage (5) ainsi que, de préférence également, l'entraînement en rotation (3) du plateau tournant (2), se trouvent au-dessous de ce dernier; et par le fait que le système de montage pivotant (16) est particulièrement rapproché du plateau tournant (2).

9. Table rotative de soudage selon l'une des revendications 1 à 8, caractérisée par le fait que l'arbre d'entraînement (17) destiné au plateau tournant (2) est réalisé en tant qu'arbre creux, et forme un guide longitudinal pour la tige de levage (8) du dispositif d'ablocage (5).

10. Table rotative de soudage selon l'une des revendications 1 à 9, caractérisée par le fait que, en présence d'une tige de levage (8) en plusieurs parties, le tronçon (8a) de cette tige de levage qui est situé côté entraînement vient sensiblement à fleur dans la position extrême inférieure, par son extrémité libre (12), avec le plan d'appui (7) du plateau tournant (2), et présente à cette extrémité un accouplement, de préférence un trou taraudé (13) destiné au rattachement d'un prolongement (8b).

11. Table rotative de soudage selon l'une des revendications 1 à 10, caractérisée par le fait que le moteur (21) d'entraînement en rotation est relié à une transmission (20) réalisée, en particulier, sous la forme d'une transmission réglable en continu, de préférence en tant que transmission à rondelles à portée sphérique; et par le fait que le moteur d'entraînement (21) est réalisé de manière à tourner avec une vitesse angulaire sensiblement constante et est réversible pour une marche à droite et à gauche, l'arbre creux d'entraînement (17) portant alors, de préférence, une roue tangente (18) qui engrène dans une vis sans fin (19) respectivement associée au moteur d'entraînement (21) ou à la transmission intercalaire (20).

12. Table rotative de soudage selon l'une des revendications 1 à 11, caractérisée par le fait que l'entraînement en rotation (3) du plateau tournant (2), ainsi que l'entraînement du dispositif central d'ablocage (5), sont réalisés sous la forme d'un bloc unitaire cohérent, pouvant globalement pivoter avec le plateau tournant (2); et par le fait que l'entraînement en rotation (3) se trouve, de préférence, entre le plateau tournant (2) et le vérin de blocage (22) associé au dispositif d'ablocage (5).

13. Table rotative de soudage selon l'une des revendications 1 à 12, caractérisée par le fait que le bâti (25) de la machine est réalisé, à partir des deux paliers de pivotement (16), muni de deux branches avec deux colonnes de soutien (28) reliées l'une à l'autre, au-dessous de la boîte (26) de paliers de rotation, par l'intermédiaire d'au moins une traverse (29) disposée à distance du sol; et par le fait que les colonnes de soutien (28) présentent de préférence, à l'extrémité inférieure, des orifices latéraux d'intervention (30).

**Claims**

1. A welding turntable (1) including a motor-driven rotary disc (2) for supporting and positioning a workpiece (6) to be worked as well as possibly a pivot bearing (16) for laterally tilting the rotary disc (2) and further including a clamping fixture (5) which serves to hold the workpiece in place and has a holding column projecting above the plane of the bearing side (7) of the rotary disc (2), characterized in that the holding column has at its free end (9) connecting means (10) for holders (11) acting upon the workpiece (6) and takes the form of a displaceable lifting rod (8) and that the lifting drive of the latter is disposed underneath the rotary disc (2).

2. The welding turntable as claimed in claim 1, characterized in that the lifting rod (8) is connected to at least one clamping cylinder (22) as the lifting drive, and that the lifting rod (8) is preferably variable in length and for this purpose is composed in particular of a plurality of interconnectable segments (8a, 8b).

3. The welding turntable as claimed in claim 1 or claim 2, characterized by having a lifting rod (8) disposed in the central area of the rotary disc (2) of said welding turntable, possibly approximately centrally thereto.

4. The welding turntable as claimed in any one of claims 1 to 3, characterized in that at least one transverse opening (10) to receive a bolt-like holder (11) or the like is provided at the free end of the lifting rod (8) or of the extension (8b) thereof and that preferably at least the lifting drive for the lifting rod (8) is connected to a locking means in such a manner that in the clamping position the lifting drive is locked outside an approximately horizontal position of the rotary disc (2).

5. The welding turntable as claimed in any one of claims 1 to 4, characterized by having at least one additional side holder (14) with in each case one clamping cylinder (15) for clamping a workpiece or a part thereof, said side holders preferably being devised such that they act upon the workpiece approximately towards the rotary disc, that the clamping cylinders (15) suitably perform a motion approximately parallel to the rotary disc and that provision is preferably made for side stops for the workpiece which are diametrically disposed with respect to the side holder(s).

6. The welding turntable as claimed in any one of claims 1 to 5, characterized in that at least one, preferably two lifting cylinders (23, 24) are provided as the tilting drive for the rotary disc (2) and the like, said cylinders acting on the one hand on the machine frame (25) and on the other hand acting on a case (26) or the like enclosing the bearing for rotation of the rotary disc (2) and that the angle of tilt is adjustable and is at most preferably more than 90°, e.g. 105°.

7. The welding turntable as claimed in claim 6, characterized in that at least one adjustable stop is provided to limit the tilting motion and that preferably the lifting cylinders (23, 24) for the tilting motion and preferably also the clamping cylinders (15, 22) for the clamping fixtures take the form of pneumatic or hydraulic cylinders.

8. The welding turntable as claimed in any one of claims 1 to 7, characterized in that the drive (4) for the central clamping fixture (5) as well as preferably also the rotary drive (3) for the rotary disc (2) are located underneath the latter and that the pivot bearing (16) is disposed close to the rotary disc (2).

9. The welding turntable as claimed in any one of claims 1 to 8, characterized in that the driving shaft (17) for the rotary disc (2) is devised as a hollow shaft and forms a longitudinal guide for the lifting rod (8) of the clamping fixture (5).

10. The welding turntable as claimed in any one of claims 1 to 9, characterized in that, for a multipart lifting rod (8), in the lower end position the free end (12) of the lifting rod segment (8a) at the driving side is approximately flush with the bearing plane (7) of the rotary disc (2) and has at said end a coupling, preferably a tapped hole (13) for connecting an extension (8b).

11. The welding turntable as claimed in any one of claims 1 to 10, characterized in that the motor (21) of the rotary drive is connected with a gear (20) which in particular takes the form of an infinitely variable gear, preferably a spherical disc gear, and that the driving motor (21) is devised to run at an approximately constant speed and is adapted to be switched across from revolving clockwise to anti-clockwise, preferably the hollow shaft (17) of the drive bearing a worm wheel (18) meshing with a worm (19) associated with the driving motor (21) or the intermediate gearing (20).

12. The welding turntable as claimed in any one of claims 1 to 11, characterized in that the rotary drive (3) for the rotary disc (2) as well as the drive of the central clamping fixture (5) take the form of a cohesive unit which is laterally tiltable as a body with the rotary disc (2), and that the rotary drive (3) is preferably located between the clamping cylinder (22) for the clamping fixture (5) and the rotary disc (2).

13. The welding turntable as claimed in any one of claims 1 to 12, characterized in that the machine frame (25) is two-legged starting from the two pivot bearings (16) and has two supporting columns (28) interconnected underneath the case (26) by at least one cross bar (29) which is disposed at a distance from the base, and that preferably the supporting columns (28) have at the lower end lateral openings (30) for engagement.

1/4

Fig.1

Fig. 2

3/4

Fig. 3

Fig. 4